# EUROPEAN PATENT SPECIFICATION

(11) **EP 3 669 817 B1**
(45) Date of publication and mention of the grant of the patent: **22.11.2023**
(21) Application number: 18855272.3
(22) Date of filing: 17.09.2018
(51) Int. Cl.: A61C 8/00, A61C 13/00, A61C 13/02

(54) **DENTAL IMPLANT ASSEMBLY AND METHOD FOR MANUFACTURING SAME**
ZAHNIMPLANTATANORDNUNG UND VERFAHREN ZUR HERSTELLUNG DAVON
ENSEMBLE IMPLANT DENTAIRE ET SON PROCÉDÉ DE FABRICATION

(30) Priority: 18.09.2017 KR 20170119651
(43) Date of publication of application: 24.06.2020
(73) Proprietor: Osstemimplant Co., Ltd., Seoul 08505 (KR)
(72) Inventor: LIM, Hyung Jin, Busan 48090 (KR); PARK, Jae Jun, Busan 48054 (KR); CHOI, Hong Young, Busan 47537 (KR)
(74) Representative: Isarpatent
(86) International application number: PCT/KR2018/010930
(87) International publication number: WO 2019/054831

(56) References cited:
- KR-A- 20110 035 294
- KR-A- 20110 064 402
- KR-A- 20110 064 402
- KR-A- 20140 141 463
- KR-A- 20160 123 075
- KR-B1- 100 540 345
- KR-B1- 101 309 700
- US-A1- 2013 108 984
- LEONE, William C.: "Galling and seizing characteristics of titanium and titanium-base alloys", Interim Technical Report- Carnegie Institute of Technology, no. 2, 15 April 1952 (1952-04-15), - 15 October 1952 (1952-10-15), pages 1-30, XP055623549, Pittsburgh

## Description

### [Technical Field]

The present invention relates to a dental implant assembly and a method of manufacturing the same, and more particularly, a dental implant assembly in which a surface roughness is selectively given to a partial area of a screw so as to improve a fastening force with a fixture and a method of manufacturing the same.

### [Background Art]

An implant means a substituent for restoring lost human skin tissue. In a dental clinic, an implant generally means a substituent formed by implanting and bonding a fixture into and to an alveolar bone from which a natural root of a tooth is detached to generally replace a dental root (root) of a lost tooth and fixing an artificial tooth (that is, a prosthesis) thereto so as to restore an original function of the tooth.

Such dental implants may be diversely classified according to a method of coupling an artificial tooth with a dental root. Among them, a screw type implant is present as a case using a fastening force of a screw. Conventional screw type implant systems (implant assemblies) each include a fixture, an abutment, an artificial tooth, and the like.

The fixture performs a function of being implanted into an alveolar bone and fixing an entire implant system and is manufactured using titanium and the like which has excellent biocompatibility for synostosis with human osseous tissue. The abutment performs a function of being coupled with the fixture and fixing and supporting the artificial tooth. The artificial tooth is manufactured to have a tooth shape through operations of taking an impression, manufacturing a working model, manufacturing a wax mold, embedding, burning out, and the like.

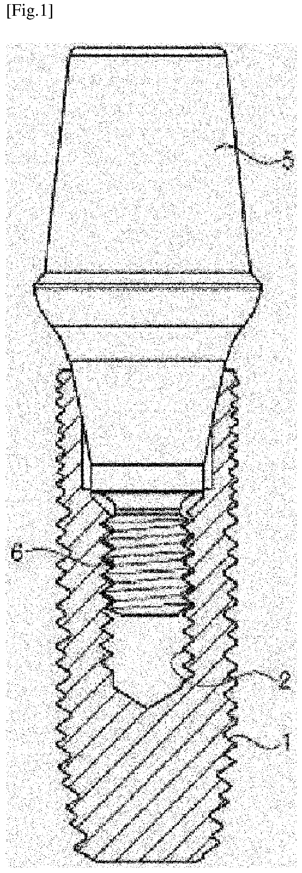

As shown in FIG. 1, an implant assembly according to the related art includes a fixture 1 implanted into an alveolar bone, an abutment 5 as an upper structure coupled with the fixture 1, and an artificial tooth (not shown) fixed to the fixture 1 by the abutment 5. The abutment 5 and the fixture 1 are coupled through screw coupling. FIG. 1 illustrates a method of coupling the abutment 5 with the fixture 1 through screw coupling between a female screw portion 2 formed on an inner circumferential surface of an inner circumferential hole of the fixture 1 and a male screw portion 6 formed on an outer circumferential surface of a bottom end of the abutment 5.

A variety of loads act on a prosthesis fixed to the abutment such that screw coupling is degraded after long-time use. In this case, since the prosthesis may be moved vertically and removed or a screw coupling portion may be damaged, a dental implant assembly capable of preventing such phenomenon is necessary.

KR 2011 0064402 A provides a dental implant assembly to improve fastening between an abutment and a fixture by relatively increasing the contact area of a screw contact surface. KR 100 540 345 A1 provides a dental implant, characterized in that the surface of the abutment screw by selecting any one of ZrN and TiN to enhance the wear resistance by the ion plating, and to improve the anti-loosening function by giving strength to the surface of the screw. US 2013/108984 A1 provides a connection between a post part provided for being screwed into the jawbone and an associated superstructure part to which a dental prosthesis can be fastened.

### [Disclosure]

### [Technical Problem]

The present invention is directed to providing a dental implant assembly capable of increasing a fastening force between a fixture and a screw, minimizing looseness, and preventing damage and fracture.

### [Technical Solution]

The present invention provides a dental implant assembly, as defined by independent claim 1. The dental implant assembly includes a fixture in which an insertion groove including a female screw portion and a first flat surface are formed and a screw including a head portion and a male screw portion screw-coupled with the female screw portion. Here, a downward flank of the female screw portion and an upward flank of the male screw portion are bonded to each other. Also, a surface of an upward flank of the male screw portion is electropolished while a downward flank of the male screw portion is masked, such that the surface of the upward flank of the male screw portion includes a plurality of grooves.

The grooves may each have a width of 100 nm or less and a depth of 100 nm or less.

The grooves may have a honeycomb-like structure.

A surface roughness Rz of the male screw portion may be 0.2 to 0.4 µm.

The dental implant assembly may be formed of a titanium-based material.

The present invention provides a method of manufacturing a dental implant assembly according to claim 1, as defined by claim 6.

The masking may be performed by emitting a laser toward the head portion.

The masking may be performed by spraying a masking solution over the head portion.

The masking may be performed by emitting a laser toward the downward flank in a direction parallel to an extension line of the upward flank.

The masking may be performed by spraying a masking solution over the downward flank in a direction parallel to an extension line of the upward flank.

### [Advantageous Effects]

According to one aspect of the present invention, a surface roughness is selectively given to a partial area of a screw so as to improve a fastening force with a fixture.

Effects of the present invention are not limited to the above effect and should be understood as including all effects derivable from the detailed description of the present invention or components of the present invention disclosed in the claims.

### [Description of Drawings]

FIG. 1 is a side cross-sectional view of a conventional implant assembly;
FIG. 2 is a side cross-sectional view of an implant assembly according to one embodiment of the present invention;
FIGS. 3 and 4 are schematic diagrams illustrating a method of masking a screw according to one embodiment of the present invention;
FIG. 5 illustrates scanning electron microscope (SEM) images of surfaces of upward flanks of screws according to the embodiment of the present invention and a comparative example;
FIG. 6 illustrates atomic force microscope (AFM) images of surfaces of upward flanks of screws according to the embodiment of the present invention and a comparative example;
FIG. 7 illustrates a result of measuring torque losses and torque loss rates according to a 1×10⁵ cycle fatigue test on screws according to the embodiment of the present invention and a comparative example; and
FIG. 8 illustrates a result of measuring cycles to fracture caused by a fatigue test on the screws according to the embodiment of the present invention and a comparative example.

### [Modes of the Invention]

Hereinafter, the present invention will be described with reference to the attached drawings. However, the present invention may be implemented in a variety of different forms and thus is not limited to the embodiments described herein. Throughout the drawings, for clear description of the present invention, irrelevant parts will be omitted. Throughout the specification, like elements will be referred to as like reference numerals.

Throughout the specification, when a part is stated as being "connected" to another part, the part is not only "directly connected" but also "indirectly connected" to the other component with another member therebetween. Also, when a portion is stated as "including" a component, unless defined particularly otherwise, it means that the portion may further include another component rather than excluding another component.

### Dental Implant Assembly

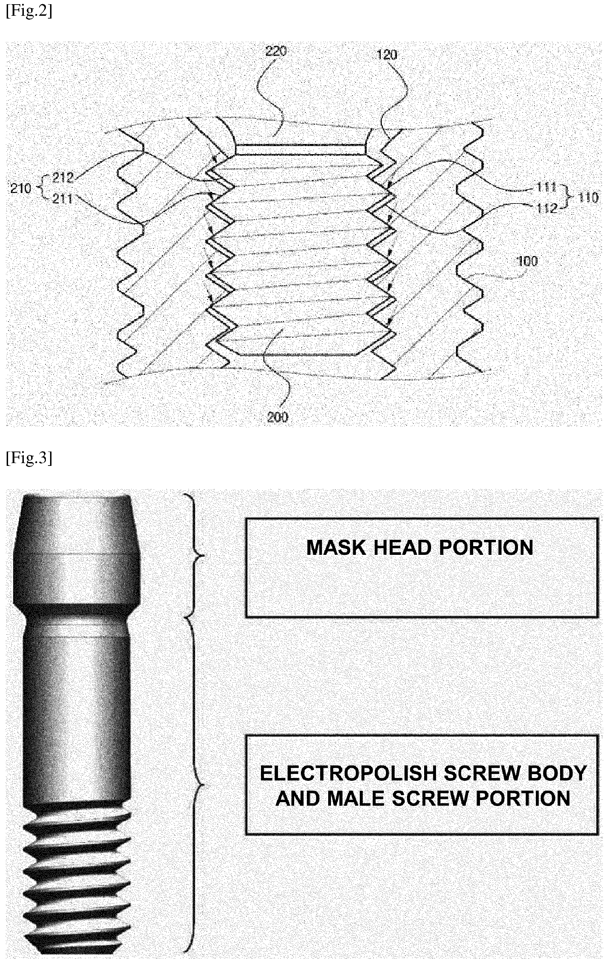

FIG. 2 is a side cross-sectional view of an implant assembly according to one embodiment of the present invention.

Referring to FIG. 2, a dental implant assembly according to one embodiment of the present invention includes a fixture 100, in which an insertion groove including a female screw portion 110 and a first flat surface 120 is formed, and a screw 200 including a male screw portion 210 screw-coupled with the female screw portion 110 and a head portion 220. Here, a downward flank 111 of the female screw portion 110 and an upward flank 211 of the male screw portion 210 are bonded to each other, and a surface of the male screw portion 210 includes a plurality of grooves.

The dental implant assembly includes the fixture 100 implanted into an alveolar bone and the screw 200 coupled with the fixture 100. A prosthesis (not shown) and an abutment (not shown) may be coupled with the screw 200.

The fixture 100 and the screw 200 may be coupled by screw coupling between the female screw portion 110 formed in the insertion groove of the fixture 100 and the male screw portion 210 formed on an outer circumferential surface of the screw 200. A fixing force between the fixture 100 and the screw 200, that is, torque during fastening, may be obtained by a frictional force between the fixture 100 and the screw 200.

Contact between the fixture 100 and the screw 200 may be performed on a contact surface where the downward flank 111 of the female screw portion 110 of the fixture 100 and the upward flank 211 of the male screw portion 210 of the screw 200 come into contact with each other.

In this case, to prevent the screw 200 from being loosened, it is necessary to minimize an external load applied to the contact surface and to maximize a compressive force between the fixture 200 and the screw 200.

To minimize the external load, it is necessary to minimize a lever length by implanting the fixture at an accurate position while designing the prosthesis simultaneously with designing occlusion to transfer a load along a major axis of the fixture so as to prevent excessive stress concentration caused by moment. Also, since the compressive force is obtained as a result caused by a tensile force generated by the screw being elongated by torque applied when the screw is tightened, it is necessary to maximize elongation of the screw within an allowable range in order to maximize a full load of the screw.

However, the entire torque transferred when the screw is fastened does not act as the full load, and a part thereof is lost to overcome the frictional force. Generally, about 50% of torque is lost to overcome a frictional force generated on a contact surface between a head portion of the screw and the abutment, about 40% of torque is lost to overcome a frictional force generated on a contact surface between the male screw portion of the screw and the female screw portion of the fixture, and only about 10% of torque is converted into the full load.

With respect to this, when the fixture 100 and the screw 200 are fastened, a surface of the male screw portion 210 of the screw 200 which forms the contact surface, particularly, a surface of the upward flank 211 of the male screw portion 210, has a plurality of grooves having a nm size. Here, since the surface of the upward flank 211 is substantially flattened such that a frictional coefficient becomes significantly decreased, the full load converted from the torque applied when the fixture 100 and the screw 200 are fastened may be increased such that the fastening force between the fixture 100 and the screw 200 may be increased.

The grooves may each have a width of 100 nm or less, and more preferably, 1 to 100 nm and may each have a depth of 100 nm, and more preferably, 1 to 100 nm. Also, a surface roughness Rz of the upward flank of the male screw portion may be 0.2 to 0.4 µm. When a maximum width and a maximum depth of the groove and the surface roughness of the upward flank of the male screw portion are within the ranges, the converted full load may be increased by reducing a force lost by abrasion caused by screw rotation at the contact surface between the upward flank 211 of the male screw portion 210 of the screw 200 and the downward flank 111 of the female screw portion 110 of the fixture 100 when the screw and the fixture are fastened.

The grooves may have a honeycomb-like structure. The term "honeycomb-like structure" which is used herein is a structure similar to a honeycomb structure formed on a flat panel and means a honeycomb structure formed in a circular groove.

The dental implant assembly may further include an abutment including a second flat surface bonded to the first flat surface and a through hole that the head portion is inserted into and coupled to. Here, the abutment and the screw may be integrally formed.

The dental implant assembly may be formed of a titanium-based material. One or more of the fixture, the screw, and the abutment, which are included in the dental implant assembly, may be formed of a titanium-based material. The term "titanium-based material" which is used herein means pure titanium or an alloy of titanium with another metal in a periodic table of elements.

The dental implant may not include a surface oxidized layer which is not a natural oxidized layer. The term "natural oxidized layer" which is used herein is a layer formed by a surface of an implant coming into contact with oxygen in the air and means a layer having a thickness less than 8 nm. The term "surface oxidized layer which is not a natural oxidized layer" is a layer formed by a surface of an implant coming into contact with artificially injected oxygen or an oxygen-containing material and means a layer of an entire oxygen layer excluding the natural oxidized layer.

### Method of Manufacturing Dental Implant Assembly

Another aspect of the present invention provides a method of manufacturing a dental implant assembly including (a) masking a head portion of a screw to expose a male screw portion, (b) electropolishing the upward flank by applying a voltage of 1 to 30 V while the screw is dipped into an electrolyte, (c) washing and drying the screw, and (d) coupling the screw, a fixture, and an abutment.

FIG. 3 is a schematic diagram illustrating a method of masking the screw according to one embodiment of the present invention. Referring to FIG. 3, in operation (a), to selectively electropolish the male screw portion of the screw, the male screw portion may be exposed by masking the head portion. Here, the male screw portion may include not only a screw thread region including the upward flank and a downward flank but also a screw body formed of a flat surface having a certain area.

The term "masking" which is used herein means a protection film configured to divide a surface of a material to be treated into a part to be treated and a part needed to remain in an original state and to prevent the part which needs to remain in the original state from being damaged and/or removed by a treating material.

The masking may be performed by emitting a laser toward the head portion, by spraying a masking solution over the head portion, or by both of the operations at the same time irrelevant to a sequence as necessary.

When the head portion is masked by emitting the laser, a mask may be formed as a surface of the head portion is transformed in phase or oxidized. An emission angle of the laser may be easily adjusted by a relative position and an angle of an optical transfer medium with respect to a light source.

Also, when the head portion is masked by spraying the masking solution, the mask may be formed by exposing and developing the applied masking solution.

The masking solution may be an acid-resistant photoresist. The acid-resistant photoresist may further include one or more of an epoxy resin, a silicone resin, an acrylic resin, and a urethane resin and may further include a hardener, paint, an additive, and the like as necessary.

Generally, when masking is performed to etch a particular part or region, a masking solution may be applied using methods such as screen coating, spin coating, painting, spray coating, dip coating, die coating, and the like. However, in operation (a), it is necessary to apply the masking to a particular region of the screw having a particular shape, that is, the head portion, and thus the masking solution may be selectively applied to the head portion using the spray coating method which allows a direction of supplying the masking solution to be uniform. Meanwhile, in operation (a), an upward flank may be exposed by masking the downward flank of the male screw portion of the screw. The downward flank of the male screw portion may be selectively masked before electropolishing in order to selectively electropolish only the upward flank of the male screw portion of the screw which is included in a contact surface when the fixture and the screw are fastened. As described above, in order to selectively electropolish the upward flank of the male screw portion, it is necessary to selectively mask the downward flank of the male screw portion in advance.

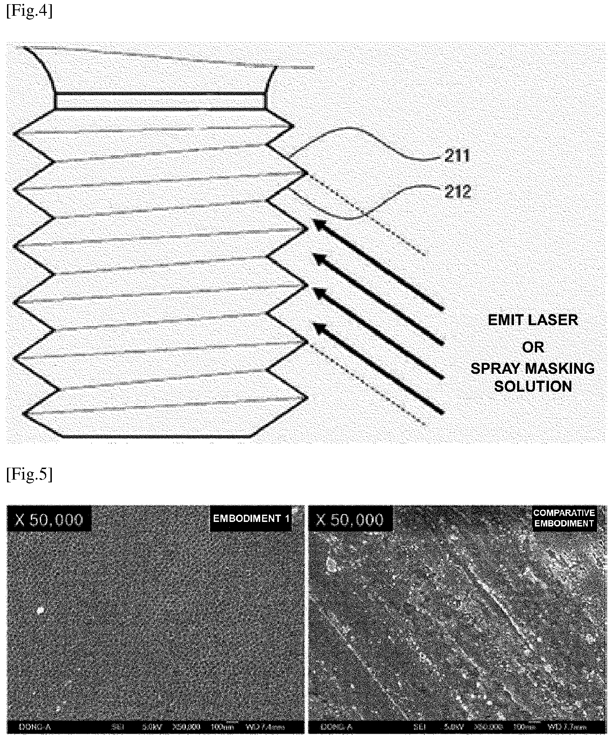

FIG. 4 is a schematic diagram illustrating a method of masking the screw according to one embodiment of the present invention. Referring to FIG. 4, the masking may be performed by emitting the laser toward the downward flank 212 in a direction parallel to an extension line (dotted line) of the upward flank 211 or by spraying the masking solution in the same direction, or both of the operations may be performed at the same time irrelevant to a sequence.

When the downward flank 212 is masked by emitting the laser, a surface of the downward flank 212 is transformed in phase or oxidized such that a mask may be formed. An emission angle of the laser may be easily adjusted by a relative position and an angle of an optical transfer medium with respect to a light source.

Also, when the downward flank 212 is masked by spraying the masking solution, the mask may be formed by exposing and developing the applied masking solution.

The masking solution may be an acid-resistant photoresist. The acid-resistant photoresist may further include one or more of an epoxy resin, a silicone resin, an acrylic resin, and a urethane resin and may further include a hardener, paint, an additive, and the like as necessary.

Generally, when masking is performed to etch a particular part or region, a masking solution may be applied using a method such as screen coating, spin coating, painting, spray coating, dip coating, die coating, and the like. However, in operation (a), it is necessary to apply the masking to only a particular region of the screw having a particular shape, that is, the downward flank 212, and thus the masking solution may be selectively applied to the downward flank 212 using the spray coating method which allows a direction of supplying the masking solution to be uniform.

When the emission direction of the laser and/or a spray direction of the masking solution is parallel to the extension line (dotted line) of the upward flank 211 toward the downward flank 212, the mask may be formed by selectively emitting and/or applying the laser and/or the masking solution toward or only to the downward flank 212 without emitting and/or applying the masking solution to the upward flank 211.

In operation (b), the upward flank 211 is electropolished by applying a voltage of 1 to 30 V while the screw is dipped into an electrolyte such that a plurality of nano-sized grooves may be formed in a surface of the upward flank 211 and a certain degree of a surface roughness may be given.

The electropolishing may be performed for one to twenty minutes, and preferably, five to fifteen minutes, and a temperature of the electrolyte may be 0 to 30 °C, and particularly, 5 to 20°C.

When the electropolishing is performed within the conditions and ranges, a groove having a width of 100 nm or less and a depth of 100 nm or less may be formed in the surface of the upward flank 211 of the male screw portion 210 of the screw 200, and a surface roughness Rz thereof may be adjusted to be within a range of 0.2 to 0.4 µm. When a maximum width and a maximum depth of the groove and the surface profile of the upward flank of the male screw portion are within the ranges, the converted full load may be increased by reducing a force lost by abrasion caused by screw rotation on a contact surface between the upward flank of the male screw portion of the screw and the downward flank of the female screw portion of the fixture when the screw and the fixture are fastened.

The electrolyte may be one selected from the group consisting of sulfuric acid, hydrofluoric acid, hydrochloric acid, nitric acid, and a mixture of two or more thereof, and preferably, may be sulfuric acid, hydrofluoric acid, or a mixture thereof, and more preferably, may be a mixture in which sulfuric acid and hydrofluoric acid are combined at a volume ratio of 20 to 80:20 to 80 but is not limited thereto. The term "acid" which is used herein may be acid itself or may be an aqueous solution in which acid is dissolved in a solvent, for example, water.

In operation (c), the screw may be washed and dried. The washing may be performed by dipping the screw electropolished in operation (b) into alcohol such as ethanol, water such as deionized water, and/or a mixture thereof and then stirring the screw and/or by applying an ultrasonic wave thereto. Through the washing, the electrolyte and/or other impurities which remain on the surface of the screw may be removed.

Also, during washing, it is necessary to completely remove the mask formed on the downward flank 212 in operation (a). When the mask is formed through emitting a laser, the mask may be removed by washing using such a solvent and applying an ultrasonic wave. When the mask is formed using a masking solution, the mask may be removed using a stripper and the like.

The drying may be performed at a temperature of 30 to 100°C and preferably, 40 to 70°C for 1 to 100 hours, and preferably, 20 to 40 hours.

In operation (d), the dental implant assembly may be completed by coupling the screw, the fixture, and the abutment. For example, the dental implant assembly may be completed by implanting the fixture into an alveolar bone to adhere thereto and then screw-coupling the screw with the fixture. Meanwhile, the screw and the abutment may be integrally formed.

Hereinafter, embodiments of the present invention will be described in detail.

### Embodiment 1

A mask was formed by uprighting a titanium screw for an implant and oxidizing a surface of a downward flank of a male screw portion of the screw by emitting a laser beam toward the downward flank.

An electrochemical cell in which the screw with the mask formed on the downward flank of the male screw portion is connected to a positive pole and a platinum/iridium alloy is connected to a negative pole and which is filled with the electrolyte (a mixture formed by mixing 0.5 M of hydrofluoric acid and 0.5 M of sulfuric acid at a volume ratio of 3:7) was manufactured. Afterwards, a plurality of nano-sized grooves were formed in the upward flank of the screw by electropolishing the screw in the electrochemical cell at a voltage of 20 V for ten minutes.

The screw was dipped into deionized water for 20 seconds. Afterwards, the screw was dipped into 100 weight% ethanol and then an ultrasonic wave was emitted thereto for ten minutes. Afterwards, the screw was dipped into deionized water and then an ultrasonic wave was emitted thereto for ten minutes. Such a process was performed three times or more, and then the screw was taken out of the deionized water and dried using an air gun.

### Embodiment 2

A mask was formed on a surface of a downward flank by uprighting a titanium screw for an implant and spraying a photoresist ink toward the downward flank of a male screw portion of the screw in a direction illustrated in FIG. 4 and exposing and developing the same.

An electrochemical cell in which the screw with the mask formed on the downward flank of the male screw portion is connected to a positive pole and a platinum/iridium alloy is connected to a negative pole and which is filled with the electrolyte (a mixture formed by mixing 0.5 M of hydrofluoric acid and 0.5 M of sulfuric acid at a volume ratio of 3:7) was manufactured. Afterwards, a plurality of nano-sized grooves were formed in an upward flank of the screw by electropolishing the screw in the electrochemical cell at a voltage of 20 V for ten minutes, and the mask remaining on the downward flank was removed using a stripper.

The screw was dipped into deionized water for 20 seconds. Afterwards, the screw was dipped into 100 weight% ethanol and then an ultrasonic wave was emitted thereto for ten minutes. Afterwards, the screw was dipped into deionized water and then an ultrasonic wave was emitted thereto for ten minutes. Such a process was performed three times or more, and then the screw was taken out of the deionized water and dried using an air gun.

### Embodiment 3

A mask was formed by uprighting a titanium screw for an implant and oxidizing a surface of a head portion of the screw by emitting a laser beam toward the head portion.

An electrochemical cell in which the screw with the mask formed on the head portion is connected to a positive pole and a platinum/iridium alloy is connected to a negative pole and which is filled with the electrolyte (a mixture formed by mixing 0.5 M of hydrofluoric acid and 0.5 M of sulfuric acid at a volume ratio of 3:7) was manufactured. Afterwards, a plurality of nano-sized grooves were formed in a male screw portion of the screw by electropolishing the screw in the electrochemical cell at a voltage of 20 V for ten minutes.

The screw was dipped into deionized water for 20 seconds. Afterwards, the screw was dipped into 100 weight% ethanol and then an ultrasonic wave was emitted thereto for ten minutes. Afterwards, the screw was dipped into deionized water and then an ultrasonic wave was emitted thereto for ten minutes. Such a process was performed three times or more, and then the screw was taken out of the deionized water and dried using an air gun.

### Embodiment 4

A mask was formed on a surface of a head portion by implanting a titanium screw for an implant and spraying a photoresist ink toward the head portion and exposing and developing the same.

An electrochemical cell in which the screw with the mask formed on the head portion is connected to a positive pole and a platinum/iridium alloy is connected to a negative pole and which is filled with the electrolyte (a mixture formed by mixing 0.5 M of hydrofluoric acid and 0.5 M of sulfuric acid at a volume ratio of 3:7) was manufactured. Afterwards, a plurality of nano-sized grooves were formed in a male screw portion of the screw by electropolishing the screw in the electrochemical cell at a voltage of 20 V for ten minutes, and the mask remaining on the head portion was removed using a stripper.

The screw was dipped into deionized water for 20 seconds. Afterwards, the screw was dipped into 100 weight% ethanol and then an ultrasonic wave was emitted thereto for ten minutes. Afterwards, the screw was dipped into deionized water and then an ultrasonic wave was emitted thereto for ten minutes. Such a process was performed three times or more, and then the screw was taken out of the deionized water and dried using an air gun.

### Comparative Example

A titanium screw for an implant, which was machined from a circular shape to a screw shape, was provided.

### Experimental Example 1: Scanning Electron Microscope (SEM) Analysis

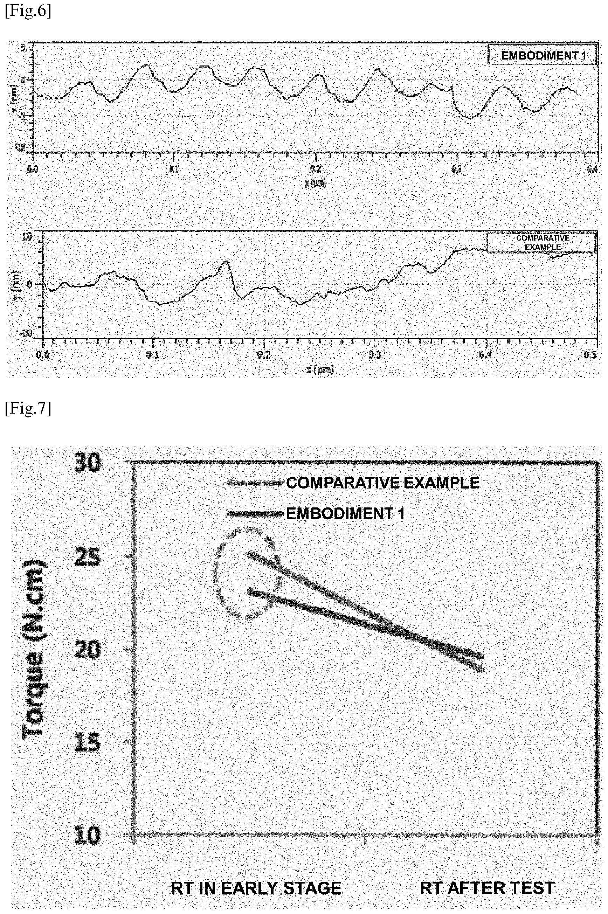

FIG. 5 illustrates a result of capturing images of surfaces of upward flanks of male screw portions of the screws obtained from Embodiment 1 and a Comparative Example using an SEM (of 50,000 magnification). Also, FIG. 6 illustrates atomic force microscope (AFM) images of the surfaces of the upward flanks of the screws according to the embodiment of the present invention and the Comparative Example.

Referring to FIGS. 5 and 6, it is shown that the upward flank of the screw manufactured in the Comparative Example includes a micro-sized groove and does not include a nano-sized groove. On the other hand, the upward flank of the screw manufactured in Embodiment 1 includes a plurality of nano-sized grooves which form a honeycomb-like structure.

### Experimental Example 2: Measuring Torque Loss and Torque Loss Rate

With respect to the screws obtained from Embodiment 1 and the Comparative Example, loosening torques (torque needed to remove the fastened screw) were measured before and after repetitively applying fatigue and an effect of the nano-sized grooves formed in the upward flank on loosening caused by a fatigue load was evaluated.

Each of the screws obtained from Embodiment 1 and the Comparative Example are fastened to fixtures with a size of 30N cm and loaded to a fatigue measurer (INSTRON 8841, INSTRON U.S.A) and a load of 250N is applied at a frequency of 2 Hz in a cycle of 1×10⁵ times in a direction tilting by 30° from verticality. The loosening torque before applying the fatigue load is measured, and the loosening torque after applying the fatigue is measured. The respective experiments are repetitively performed on five specimens.

FIG. 7 illustrates a result of measuring torque losses and torque loss rates according to a 1×10⁵ cycle fatigue test on screws according to the embodiment of the present invention and the comparative example.

Referring to FIG. 7, it may be seen that since Embodiment 1 has a torque loss or a torque loss rate, which are smaller than those in comparison to the Comparative Example, when the nano-sized grooves are formed in the upward flank of the screw, stability with respect to the fatigue load is improved. Also, the nano-sized grooves decrease a frictional coefficient such that it is possible to obtain an excellent result with respect to not only a fastening force with the fixture but also loosening prevention.

### Experimental Example 3: Measuring Fatigue Cycle

Each of the screws obtained from Embodiment 1 and the Comparative Example are fastened, with 30N cm, to fixtures and loaded to a fatigue measurer (INSTRON 8841, INSTRON U.S.A), a load of 250N is applied at a frequency of 2 Hz in a cycle of 1×10⁵ times in a direction tilting by 30° from verticality, and the number thereof until the screw is broken.

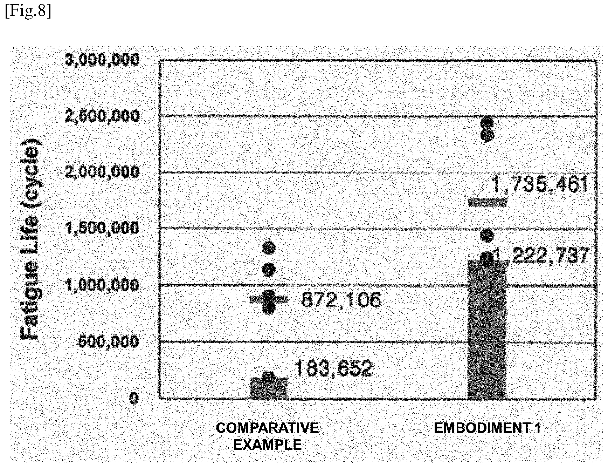

FIG. 8 illustrates a result of measuring cycles to fracture caused by a fatigue test on the screws according to the embodiment of the present invention and the comparative example.

Referring to FIG. 8, in comparison to the Comparative Example (150,000 to 900,000 times), in Embodiment 1(1,200,000 to 1,800,000), a fatigue cycle maximally increases about ten times such that it may be seen that a fatigue-resistant property is significantly improved when the nano-sized grooves are formed in the upward flank of the screw.

The above description of the present invention is merely an example, and it should be understood that a variety of modifications in other detailed shapes may be easily made by one of ordinary skill in the art without changing a technical concept or essential features of the present invention. Therefore, it should be understood that the above-described embodiments are exemplary and not limitative in every aspect. For example, each component which has been described as a single type may be implemented while being dispersed, and similarly, components which have been described as being dispersed may be implemented in an integrated form.

The scope of the present invention will be defined by the following claims.

### [Description of Reference Numerals]

100: fixture
110: female screw portion
120: first flat surface
200: screw
210: male screw portion
220: head portion
112, 211: upward flanks
111, 212: downward flanks

## Claims

1. A dental implant assembly comprising:
a fixture (100) in which an insertion groove including a female screw portion (110) and a first flat surface (120) are formed; and
a screw (200) including a head portion (220) and a male screw portion (210) screwcouplable with the female screw portion (110),
wherein a downward flank (111) of the female screw portion (110) and an upward flank (211) of the male screw portion (210) are bonded to each other,
**characterised in that** a surface of the upward flank (211) of the male screw portion (210) is electropolished while a downward flank (212) of the male screw portion (210) is masked, such that only the surface of the upward flank (211) of the male screw portion (210) includes a plurality of grooves.

2. The dental implant assembly of claim 1, wherein the grooves each have a width of 100 nm or less and a depth of 100 nm or less.

3. The dental implant assembly of claim 1, wherein the grooves have a honeycomb-like structure.

4. The dental implant assembly of claim 1, wherein a surface roughness Rz of the male screw portion (210) is 0.2 to 0.4 µm.

5. The dental implant assembly according to any one of claims 1 to 4, wherein the dental implant assembly is formed of a titanium-based material.

6. A method of manufacturing the dental implant assembly according to claim 1, comprising:
(a) masking the head portion (220) of the screw (200) to expose the male screw portion (210) and masking the downward flank of the male screw portion of the screw;
(b) electropolishing the upward flank (211) of the male screw portion (210)by applying a voltage of 1 to 30 V while the screw (200) is dipped into an electrolyte; and
(c) washing and drying the screw (200).

7. The method of claim 6, wherein the masking is performed by emitting a laser toward the head portion (220).

8. The method of claim 6, wherein the masking is performed by spraying a masking solution over the head portion (200).

9. The method of claim 6, wherein the masking of the downward flank is performed by emitting a laser toward the downward flank (212) in a direction parallel to an extension line of the upward flank (211).

10. The method of claim 6, wherein the masking of the downward flank is performed by spraying a masking solution toward the downward flank (212) in a direction parallel to an extension line of the upward flank (211).

## Patentansprüche

1. Zahnimplantatanordnung, umfassend:
eine Halterung (100), in der eine Einführungsnut ausgebildet ist, die einen Innengewindeabschnitt (110) und eine erste flache Fläche (120) aufweist; und
eine Schraube (200), die einen Kopfteil (220) und einen Außengewindeabschnitt (210), der mit dem Innengewindeteil (110) verschraubt werden kann, aufweist,
wobei eine nach unten gerichtete Flanke (111) des Innengewindeabschnitts (110) und eine nach oben gerichtete Flanke (211) des Außengewindeabschnitts (210) aneinander anliegen,
**dadurch gekennzeichnet, dass** eine Fläche der nach oben gerichteten Flanke (211) des Außengewindeabschnitts (210) elektropoliert ist, während eine nach unten gerichtete Flanke (212) des Außengewindeabschnitts (210) so maskiert ist, dass nur die Fläche der nach oben gerichteten Flanke (211) des Außengewindeabschnitts (210) mehrere Nuten aufweist.

2. Zahnimplantatanordnung nach Anspruch 1, wobei die Nuten jeweils eine Breite von maximal 100 nm und eine Tiefe von maximal 100 nm aufweisen.

3. Zahnimplantatanordnung nach Anspruch 1, wobei die Nuten eine wabenartige Struktur aufweisen.

4. Zahnimplantatanordnung nach Anspruch 1, wobei die Oberflächenrauigkeit Rz des Außengewindeabschnitts (210) 0,2 bis 0,4 µm beträgt.

5. Zahnimplantatanordnung nach einem der Ansprüche 1 bis 4, wobei die Zahnimplantatanordnung aus einem Material auf Titanbasis gebildet ist.

6. Verfahren zur Herstellung der Zahnimplantatanordnung nach Anspruch 1, umfassend:
(a) Maskieren des Kopfabschnitts (220) der Schraube (200), um den Außengewindeabschnitt (210) freizulegen, und Maskieren der nach unten gerichteten Flanke des Außengewindeabschnitts der Schraube;
(b) Elektropolieren der nach oben gerichteten Flanke (211) des Innengewindeabschnitts (210) durch Anlegen einer Spannung von 1 bis 30 V, während die Schraube (200) in einen Elektrolyten getaucht ist; und
(c) Waschen und Trocknen der Schraube (200).

7. Verfahren nach Anspruch 6, wobei das Maskieren durch Emittieren eines Lasers in Richtung des Kopfabschnitts (220) durchgeführt wird.

8. Verfahren nach Anspruch 6, wobei das Maskieren durch Sprühen einer Maskierungslösung über den Kopfabschnitt (200) durchgeführt wird.

9. Verfahren nach Anspruch 6, wobei das Maskieren der nach unten gerichteten Flanke durch Emittieren eines Lasers in Richtung der nach unten gerichteten Flanke (212) in einer Richtung parallel zu einer Erstreckungslinie der nach oben gerichteten Flanke (211) durchgeführt wird.

10. Verfahren nach Anspruch 6, wobei das Maskieren der nach unten gerichteten Flanke durch Sprühen einer Maskierungslösung in Richtung der nach unten gerichteten Flanke (212) in einer Richtung parallel zu einer Erstreckungslinie der nach oben gerichteten Flanke (211) durchgeführt wird.

## Revendications

1. Ensemble implant dentaire comprenant :
un corps d'implant (100) dans lequel une rainure d'insertion comportant une partie vis femelle (110) et une première surface plane (120) sont formées ; et
une vis (200) comportant une partie tête (220) et une partie vis mâle (210) couplable par visage avec la partie vis femelle (110),
dans lequel un flanc descendant (111) de la partie vis femelle (110) et un flanc montant (211) de la partie vis mâle (210) sont liés l'un à l'autre,
**caractérisé en ce qu'**une surface du flanc montant (211) de la partie vis mâle (210) est électropolie tandis qu'un flanc descendant (212) de la partie vis mâle (210) est masqué, de sorte que seule la surface du flanc montant (211) de la partie vis mâle (210) comporte une pluralité de rainures.

2. Ensemble implant dentaire selon la revendication 1, dans lequel les rainures ont chacune une largeur de 100 nm ou moins et une profondeur de 100 nm ou moins.

3. Ensemble implant dentaire selon la revendication 1, dans lequel les rainures ont une structure de type nid d'abeilles.

4. Ensemble implant dentaire selon la revendication 1, dans lequel la rugosité de surface Rz de la partie vis mâle (210) est de 0,2 à 0,4 pm.

5. Ensemble implant dentaire selon l'une quelconque des revendications 1 à 4, dans lequel l'ensemble implant dentaire est formé d'un matériau à base de titane.

6. Procédé de fabrication de l'ensemble implant dentaire selon la revendication 1, comprenant :
(a) le masquage de la partie tête (220) de la vis (200) pour exposer la partie vis mâle (210) et le masquage du flanc descendant de la partie vis mâle de la vis ;
(b) l'électropolissage du flanc montant (211) de la partie vis mâle (210) en appliquant une tension de 1 à 30 V tandis que la vis (200) est plongée dans un électrolyte ; et
(c) le lavage et le séchage de la vis (200).

7. Procédé selon la revendication 6, dans lequel le masquage est effectué en émettant un laser vers la partie tête (220) .

8. Procédé selon la revendication 6, dans lequel le masquage est effectué en pulvérisant une solution de masquage sur la partie tête (200).

9. Procédé selon la revendication 6, dans lequel le masquage du flanc descendant est effectué en émettant un laser vers le flanc descendant (212) dans une direction parallèle à une ligne d'extension du flanc montant (211).

10. Procédé selon la revendication 6, dans lequel le masquage du flanc descendant est effectué en pulvérisant une solution de masquage vers le flanc descendant (212) dans une direction parallèle à une ligne d'extension du flanc montant (211).
